# EUROPEAN PATENT APPLICATION

(11) **EP 2 560 403 A1**
(43) Date of publication of application: **20.02.2013**
(21) Application number: 11177664.7
(22) Date of filing: 16.08.2011
(51) Int. Cl.: H04N 21/414, H04N 21/442, H04N 21/438, H04N 21/488, H04N 21/6377

(54) **Mobile TV reception quality indicator**

(71) Applicant: Research In Motion Limited, Waterloo, ON N2L 3W8 (CA)
(72) Inventor: HYMEL, James Allen, Waterloo, Ontario N2L 3W8 (CA)
(74) Representative: Hibbert, Juliet Jane Grace

(57) **Abstract**

A portable communications device (100,206) having a display device (104) is able to download and display mobile digital television content, however, when a received signal is too weak, corrupted or otherwise insufficient, a notification message is autonomously generated by the portable communications device, notifying its user of the inability to recover mobile television data. In one embodiment, the portable communications device attempts to recover the mobile television data from a different channel (304,306) or attempts to recover other television program content from a different channel (304,306).

## Description

The present disclosure relates generally to a manner by which to facilitate viewing of television programming on a portable wireless device. More particularly, the present invention relates to an apparatus, and an associated method, by which television programming content can be downloaded or copied into a portable wireless device while the portable wireless device is being charged or otherwise not in use.

### Background

Recent years have witnessed the development and deployment of a wide range of electronic devices and systems that provide many new functions and services. Advancements in communication technologies for instance, have permitted the development and deployment of a wide array of communication devices, equipment, and communication infrastructures. Their development, deployment, and popular use have changed the lives and daily habits of many.

Cellular telephone and other wireless communication systems have been developed and deployed and have achieved significant levels of usage. Increasing technological capabilities along with decreasing equipment and operational costs have permitted, by way of such wireless communication systems, increased communication capabilities to be provided at lowered costs.

Early-generation, wireless communication systems generally provided for voice communications and limited data communications. Successor-generation communication systems have provided increasingly data-intensive communication capabilities and services. New-generation communication system, for instance, provide for the communication of large data files at high through-put rates by their attachment to data messages.

Wireless communications are typically effectuated through use of portable wireless devices, which are sometimes referred to as mobile stations. The wireless devices are typically of small dimensions, thereby to increase the likelihood that the device shall be hand-carried and available for use whenever needed as long as the wireless devices positioned within an area encompassed by a network of the cellular, or analogous, communication system. A wireless device includes transceiver circuitry to provide for radio communication, both to receive information and to send information.

Some wireless devices are now provided with additional functionality. Some of the additional functionality provided to a wireless device is communication-related while other functionality is related to other technologies. When so-configured, the wireless device forms a multi-functional device, having multiple functionalities.

A mobile television or mobile TV functionality, which provides for the recordation and display of video images and audio of a television program is amongst the functionalities that are now sometimes provided to wireless devices. Because of the small dimensions of typical wireless devices, and the regular carriage of such devices by users, a wireless device having mobile TV functionality is available to the user to record a television program. A program, once recorded, can be saved, for example, at a storage element of the wireless device and/or can be viewed on the device or perhaps transferred elsewhere because the television content is defined or kept as a file, which is generally considered to be a named or identified collection of information, such as a set of data bits or bytes used by a program. And, since the recorded image is kept as a file, the file can be appended to a data message and sent elsewhere. The data file forming the image or images is also storable at the wireless device, available subsequently to be viewed at the wireless device.

Various methodologies have been developed by which to facilitate the recordation of television programming or content. A problem exists, however, in that the location of a portable wireless device does not always enable the reliable reception of a radio frequency signal carrying digital data that represents the television programming. A method and apparatus by which an RF signal carrying television program-containing data can be more reliably received would be an improvement over the prior art. It is in light of this background information related to television programming information recording that the significant improvements of the present invention have evolved.

### Brief Description of the Drawings

FIG. 1 is a front elevation view of a portable communications device having mobile television reception and viewing capability;

FIG. 2 is a block diagram of a wireless communications system and a block diagram of a portable communications device depicted in FIG. 1;

FIG. 3 is a graphical depiction of how portions of the electromagnetic spectrum are divided into mobile television channels;

FIG. 4 depicts a method of receiving a mobile device television signal and determining a characteristic of the signal, transmitting a notification message and displaying television content.

### Detailed Description

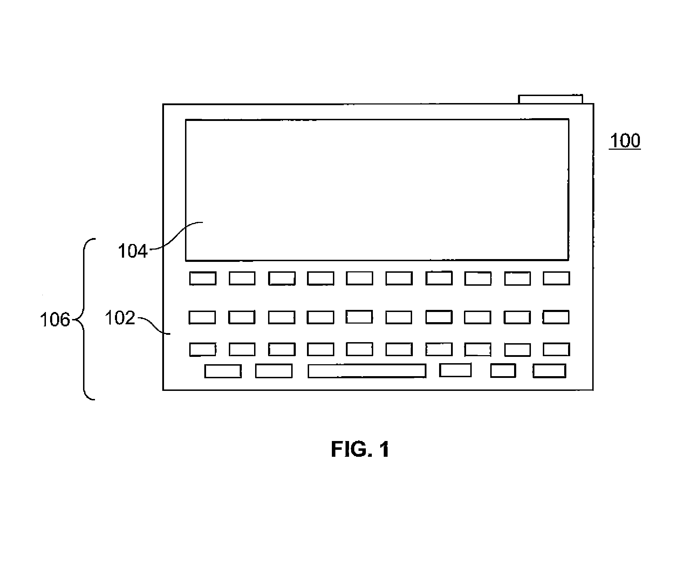

FIG. 1 is a front elevation view of a portable communications device 100, which is configured to provide wireless two-way voice and data communications but to also provide mobile television (mobile TV) viewing technology. The communications device 100 is also comprised of a display screen or display device 104 on which text, graphics and video images can be displayed, the video images being displayed in frames. The display device 104 is preferably embodied as either plasma, liquid crystal or a light emitting diode panel. The keyboard 102 and the display device 104 are both considered herein to comprise a user interface 106.

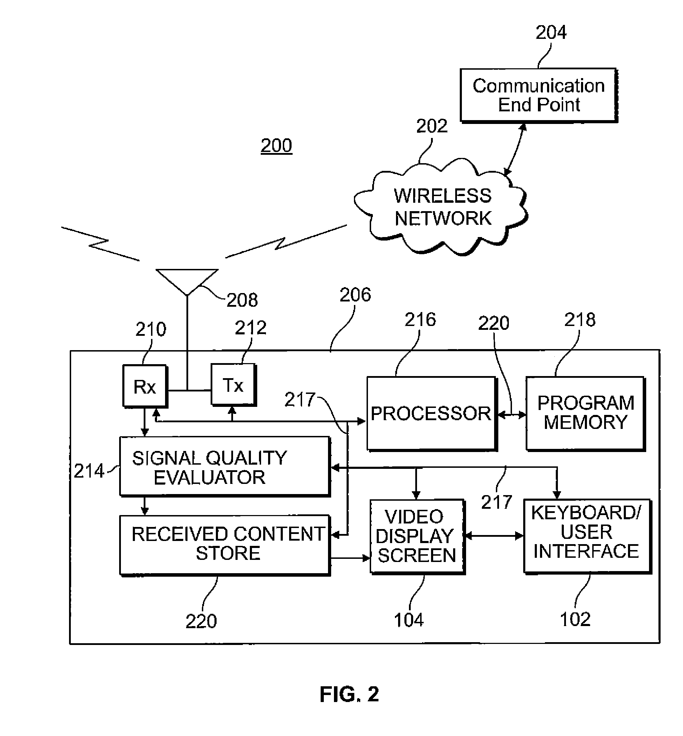

FIG. 2 is a functional block diagram of a wireless communication system 200. The system 200 is comprised of a conventional wireless communications network 202, one or more communication endpoints 204, such as a web site, a wireless communications device such as the one depicted in FIG. 2 and identified by reference numeral 206, or a land-line telephone number. The portable communications devices 206 is one that is configured to be capable of receiving and storing mobile TV data and capable of displaying television content, i.e., frames of images as video and audio.

The portable communications device 206 shown in FIG. 2 is comprised of a conventional antenna 208, which is depicted in FIG. 2 as extending externally from the device 206 for purposes of illustration. A radio frequency receiver 210 and radio frequency transmitter 212 are both coupled to the same antenna 208 through a duplexer, not shown but well-known to those of ordinary skill in the art.

The radio frequency signal receiver 210 is constructed to receive radio frequency (RF) signals that carry information in the form of digital data, and from which television images can be generated on a display device once the data is recovered and assembled in the device 206. As used herein, data on an RF signal, which represents a television signal, i.e., video and audio, which is perceptible on a mobile device such as a portable communications device 206 depicted in FIG. 1 and FIG. 2 is considered to be a mobile device television signal or MDTV signal. Such signals are similar to conventional broadcast television signals and well-known in various European countries where such signals are routinely used to "broadcast" television programming to portable communications devices. The MDTV signals are comprised of signals broadcast on the same frequency spectrum as terrestrial television signals but are broadcast with a slightly different format for use on small portable communications devices.

The receiver 210 is depicted in FIG. 2 as being coupled to a signal quality evaluator 214. The signal quality evaluator 214 receives the MDTV signal, i.e., MDTV data, from the radio frequency receiver 210 and provides an indication of the "quality" of the MDTV signal or data being received.

As used herein, a "bus" is a set of electrically-parallel conductors in a computer system that forms a transmission path for electrical signals. FIG. 2 shows that the radio frequency receiver 210, the transmitter 212 and the signal quality evaluator 214 are coupled to a computer or processor 216 via a "first" bus identified by reference numeral 217 and which is external to the processor 216. The first bus 217 also connects the processor 216 to a received content store 220 where television program data can be saved, a display screen 104 and a keyboard or other user interface 102.

In one embodiment, the processor 216 and semiconductor memory devices that store program instructions for the processor 216 are co-located on the same physical semiconductor die. In such an embodiment, a second, conventional address/data/control bus 220 couples the processor 216 to one or more semiconductor memory devices 218 that store program instructions and data for the processor 216. The processor 216 thus controls the receiver 210, transmitter 212 and the signal quality evaluator 214 by executing program instructions stored in a memory device 218 and then sending and receiving signals to and from the various peripheral devices (receiver 210, transmitter 212 and the signal quality evaluator 214) via the first bus 217.

In an alternate embodiment, wherein the program memory 218 is not co-located with the processor 216 on the same physical die, one bus having the attributes and functionality of both the first bus 217 and second bus 220 extends between the processor 216 and all of the devices external to it, i.e., the program memory 218, receiver 210, transmitter 212, signal quality evaluator 214, received content store 220, display screen 104 and the keyboard 102.

Program instructions stored in the memory device 218 cause the processor 216 to perform various operations. Among other things, instructions stored in the program memory 218 cause the processor 216 to obtain from either the receiver 210 or the signal quality evaluator 214, information in the form of data, which indicates of the quality of the mobile device television signal carried on the radio frequency signals that are received at the antenna 208. If the quality of the mobile device television signal is insufficient, poor or inadequate for viewing a mobile television program on a display screen 220 the processor 216 instructs the transmitter 212 to output or generate a message on the antenna 208 which is carried via the network 202 to a communication endpoint 204.

The MDTV signal "quality" can be defined in different ways and therefore determined or measured in different ways. Since the MDTV signal is data, the "quality" of the MDTV signal/data can be a data or bit error rate, e.g., a number of invalid or corrupt data bytes per number of data bytes sent. On the other hand, since the MDTV signal or data is transmitted on a radio frequency carrier, the radio frequency carrier will have an amplitude when it is received by the receiver 210, which can also be considered to be a "quality" of the MDTV signal. Similarly, when the RF carrier is transmitted, it will be accompanied by noise on the channel or RF spectrum. The MDTV signal quality can also be considered to be a signal-to-noise ratio of the RF carrier to noise on the channel it is transmitted on.

The received MDTV signal's poor-quality-signal message that is generated or effectuated by the processor 216 but transmitted by the transmitter 212, is configured to notify a recipient user of the portable communications device 206 that the received MDTV signal quality is inadequate or insufficient for viewing a television signal. The user of the device 206 can thereafter adjust the location of the communications device 206 and its included antenna 208 to provide for an improved reception.

In a first embodiment, the signal quality evaluator 214 determines or measures a bit error rate of the digital data received by the radio frequency receiver 210 on a first channel to which the receiver 210 is tuned by the processor 216 operating under program control of instructions stored in the program memory 218. In another embodiment, the received signal quality evaluator 214 measures noise on the channel and provides an indication of the radio frequency signal absolute noise-level or a signal-to-noise ratio. In another embodiment, the signal quality evaluator 214 detects a bit error rate (BER) and determines whether the BER exceeds a threshold value above which the recovered data is insufficient or inadequate to provide a useable television signal on the display screen 104.

If the signal quality evaluator 214 determines that the received signal is sufficient or adequate to be used to reproduce a television signal on the video display screen 104, the signal quality evaluator provides the recovered mobile device television signal to a memory device 220 where the received data from which a television signal or program content can be generated. The received content store device 220 is coupled to the processor 216 via the bus 217 and stores the digital data from which images can be generated on the display device 104.

If the received signal quality evaluator 214 determines that the MDTV signals are too noisy, have a too-high bit error rate or are otherwise inadequate or insufficient to provide an acceptable image or image quality on the video display screen 104, program instructions in the program memory 218 cause the processor 216 to cause the transmitter 212 to output an error message to the user of the device 206. Alternatively, the program instructions stored in the program memory 218 will cause the receiver 210 to attempt to recover MDTV signals on a different channel that might be of a better quality. Such messages can include, but are not limited to: a short message service or "SMS" message sent to the same communications device 206 or a different device; a preformatted and/or predetermined e-mail sent to a predetermined addressee, such as the user of the portable communications device. In another embodiment, the portable communications device 206 is provided with a small loudspeaker, vibrator or an acoustic enunciator. When the MDTV signals are poor or corrupted, an audible alarm is generated to advise persons nearby the device 206 that the device 206 needs to be re-located to improve reception or, a better signal provided.

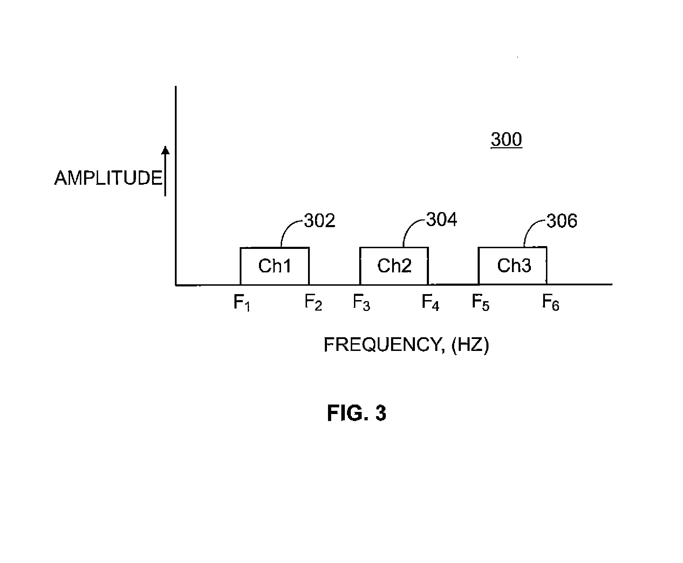

FIG. 3 is a plot or graph 300 of different frequency channels 302, 304 and 306 on which the same or different MDTV signals are carried on different portions of a radio frequency spectrum. A first channel 302 occupies a portion of the radio frequency spectrum between a first pair of two different radio frequencies *f*₁ and *f*₂. A second channel 304 is between a second pair of two different radio frequencies *f*3 and *f*4. A third channel 306 is between yet a third pair of two other frequencies *f*₅ and *f*₆. The radio frequency spectrum between each pair of frequencies is considered a band or channel occupied by a radio frequency carrier that is modulated with the data that comprises an MDTV signal. The channels depicted in FIG. 3 are shown to be separated from each other by a portion of the radio frequency spectrum. In an alternate embodiment, the channels are frequency-contiguous, i.e., there is little or no frequency separation between them.

It is well known that the propagation of an RF signal will depend on the signal's wavelength. Signal propagation thus depends on a signal's frequency.

Different MDTV channels occupy different portions of the electromagnetic spectrum. In one embodiment, two or more of the channels 302, 304 and 306 carry MDTV signals of different television content or program information. In another embodiment, the various channels 302, 304 and 306 carry the same program information. By tuning the receiver 210 to a different channel 302, 304 and 306 it is thus possible for the receiver 210 to receive different television program information from a different channel or to tune to a different channel 304 or 306 if the first channel 302 signal-to-noise ratio is too high or a bit error rate of the data on the first channel 302 is too high or if the amplitude of the radio frequency signal carrying the first channel 302 is too low or too weak to be recovered due to the fact that different channels will propagate differently.

Referring again to FIG. 2, if the signal quality evaluator 214 determines that the MDTV signal in one channel cannot be adequately recovered, the processor 216 executes program instructions, which cause the processor 216 to instruct the receiver 210 to be tuned to a second or different radio frequency channel responsive to the quality indication of the first mobile device television signal on a first channel. The receiver 210 might thereafter be able to receive a desired MDTV signal or perhaps a different signal carrying a different television program content. Once an MDTV signal is of a sufficient quality to produce or render images on a video display screen 104, data representing the television program is stored in the received contents store 220 to be viewed at the convenience of the user.

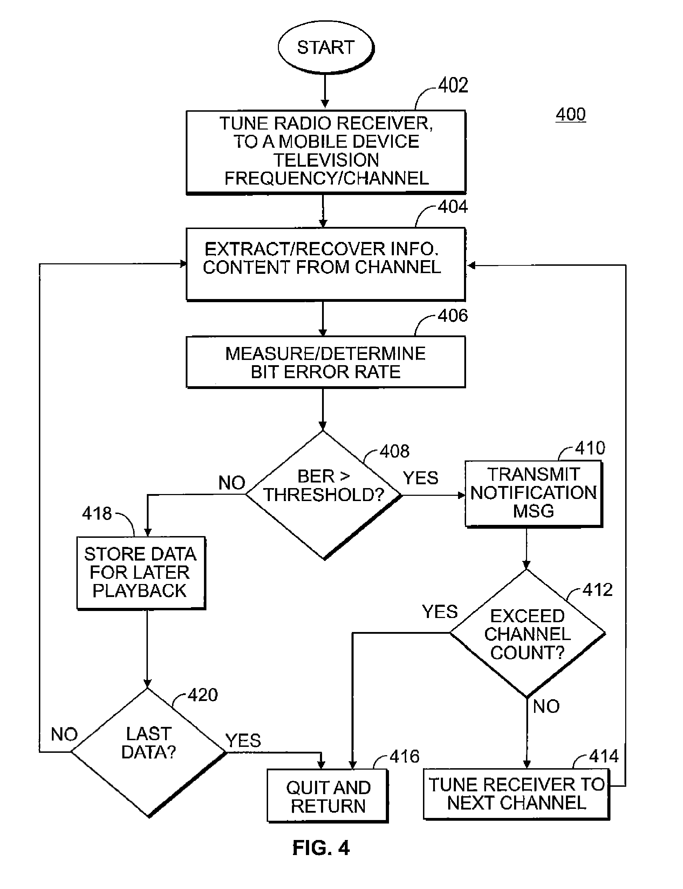

FIG. 4 depicts an example of a method for the portable communications device 100 to practice. The method 400 is comprised of a first step 402 at which the receiver 210 is tuned to a channel or frequency at which a mobile device television signal can be recovered and the integrity of the data evaluated to determine if it is possible to coherently recover the program information. At step 404, the receiver 210 extracts or recovers the information-bearing content from the channel to which the receiver 210 was tuned in step 402. Extraction or recovery of data from a radio frequency signal is well-known to those of ordinary skill in the art.

Step 406 depicts the measurement or determination of a bit error rate after the data is extracted or recovered in step 404. As stated above, FIG. 4 depicts an example of a method. In another embodiment, step 406 can include the determination of a noise level, a signal-to-noise ratio, measurement of signal amplitude or determinations of other indicators, of the likelihood that the extracted or recovered information from step 404 will render a good-quality image on the display device.

As shown in FIG. 4 at step 408 a bit error rate measured a step 406 is compared against a threshold value. The value of the (fresh?) threshold is preferably empirically determined and program into the communications device 100. In an alternate embodiment however the threshold can be user specified by the user inputting a value through the keyboard 102.

If the bit error rate of the recovered data exceeds the threshold the program proceeds to step 410 where a notification message is transmitted from the communications device transmitter 212. The notification message is thus transmitted responsive to the determined characteristic of the recovered data.

After the notification is transmitted at step 410, the program proceeds to step 412 where a test is made to determine whether the receiver should be tuned to another frequency. Given that there are finite number of channels or frequencies on which mobile television information is broadcast, step 412 is a test of whether the channel count changes exceed a number corresponding to the number of available channels. Stated another way, a decision at 412 determines if the receiver should be tuned to another channel to reattempt recovery of the mobile data television information signal.

If the receiver can be tuned to another channel at step 414 the receiver is re-tuned to the next channel and program returns to step 404 where the data is recovered again.

If there are no other channels available to be tuned to or if the number of channels that have been attempted has been reached, the method terminates at step 414. The signal quality of the mobile data television signal is insufficient to provide a usable image on the display screen. It therefore becomes pointless to continue further attempts at reception.

Returning to step 408, if the bit error rate is below the threshold, or if the other signal characteristic test has been passed, the data recovered by the receiver is considered good enough to prepare or provide a step 418 the recovered data is stored for later playback. At step 420 a test is made to determine if the end of the file has been reached if not program control returns to the step at which the data is extracted or recovered from the received signal stream. The program or method quits a step 416 when the end of the file has been reached.

Returning to FIG. 2, the signal quality evaluator 214 is depicted as being an entity separate from the receiver 210. In a preferred embodiment, the receiver 210 and the signal quality evaluator 214 can be either separate structures or part of the same physical structure that might be implemented in either hardware or program instruction steps performed by the processor 216. Those of ordinary skill in the signal processing and electronic arts will recognize that the functionality described above as being provided by the signal quality evaluator 214 can also be effectuated by program steps stored in the memory device 218 and executed by the processor 216. The program store 218 as well as instructions and stored therein should be considered structure encompassed by the attached claims.

The foregoing description is for purposes of illustration only. The true scope of the invention is set forth in the appurtenant claims.

## Claims

1. A portable communications device comprising:
a processor;
a radio frequency signal receiver coupled to the processor and which is configured to receive on a first radio frequency channel, a first mobile device television signal from which an image can be generated on a display device;
a radio frequency signal transmitter, coupled to the processor;
a memory device coupled to the processor and configured to store instructions for the processor, which when executed cause the processor to:
i. obtain from the radio frequency signal receiver, an indication of the quality of the first mobile device television signal; and
ii. effectuate transmission of a message from the radio frequency signal transmitter, responsive to a determined characteristic of a received first mobile device television signal.

2. The portable communications device of claim 1, wherein the memory device stores instructions which when executed cause the receiver to receive on a second radio frequency channel, the first mobile device television signal, responsive to the quality indication of the first mobile device television signal.

3. The portable communications device of claim 1, wherein the mobile device television signal is comprised of digital data and wherein the radio frequency signal receiver is configured to provide an indication of an error rate for received digital data.

4. The portable communications device of claim 1, wherein the mobile device television signal is comprised of radio frequency signals and wherein the radio frequency signal receiver is configured to provide an indication of radio frequency signal noise.

5. The portable communications device of claim 1, wherein the indication of radio frequency signal noise is a signal-to-noise ratio.

6. The portable communications device of claim 1, wherein the memory device stores instructions for the processor, which, when executed, cause the processor to effectuate transmission of a message from the radio frequency signal transmitter, the message being indicative of a digital data error rate greater than a threshold value.

7. The portable communications device of claim 1, wherein the radio frequency signal transmitter is configured to transmit a message, selected and configured to notify a user of the portable communications device that a received mobile device television signal is at least partially defective.

8. A method for a portable communications device, the method comprising:
receiving on a first radio frequency channel, at least part of a first radio frequency mobile device television signal, which carries digital information from which a television image can be generated on a display device in a portable communications device; and
determining a characteristic of the received mobile device television signal;
transmitting a notification message responsive to the determined characteristic; and
optionally receiving on a second radio frequency channel, at least part of the first radio frequency mobile device television signal, responsive to the determined characteristic.

9. The method of claim 8, wherein the radio frequency mobile device television signal is comprised of digital data and wherein said determining a characteristic is comprised of determining an error rate for received digital data.

10. The method of claim 8, wherein the radio frequency mobile device television signal is comprised of noise and wherein the determined characteristic is a noise component signal level.

11. The method of claim 8, wherein the radio frequency mobile device television signal is comprised of noise and wherein the determined characteristic is a signal-to-noise ratio.

12. The method of claim 8, wherein said transmitting a notification message responsive to the determined characteristic is comprised of transmitting a notification message that a television image cannot be generated from the received mobile device television signal.

13. The method of claim 8, wherein said transmitting a notification message responsive to the determined characteristic is comprised of transmitting a notification message that the digital information in the radio frequency mobile device television signal has an error rate greater than a predetermined threshold value.

14. The method of claim 8, wherein said storing information in a received mobile device television signal for later play back responsive to the determined characteristic.

15. The method of claim 8, wherein said transmitting a notification message responsive to the determined characteristic is comprised of transmitting a notification message to a communications network.
